# EUROPEAN PATENT APPLICATION

(11) **EP 4 475 020 A1**
(43) Date of publication of application: **11.12.2024**
(21) Application number: 24180627.2
(22) Date of filing: 06.06.2024
(51) Int. Cl.: G06F 21/55

(54) **REMEDIATION FOR AN ENTITY OUTSIDE A SCOPE OF AN ALERT**

(30) Priority: 09.06.2023 US 202318332554
(71) Applicant: BlackBerry Limited, Waterloo, Ontario N2K 0A7 (CA)
(72) Inventor: LOMBARDI, Robert Joseph, Waterloo, N2K 0A7 (CA); WILLIAMS, Jeffrey D., Waterloo, N2K 0A7 (CA)
(74) Representative: Novagraaf International SA

(57) **Abstract**

In some examples, a security system detects an alert generated in response to an operation on a device, the operation involving a first process and a first entity. In response to the alert, the security system discovers a second entity that is outside a scope of the alert, and applies remediation actions with respect to the first process, the first entity, and the second entity to address the alert.

## Description

### Background

Electronic devices may experience various security issues that can result in malfunctioning of the electronic devices or loss or theft of data. For example, electronic devices may be targets of attacks by various malicious entities, including humans, programs (e.g., viruses, worms, ransomware, etc.), and/or machines. Other types of security issues that may be experienced by electronic devices include electronic devices visiting potentially malicious or infected online resources (e.g., websites with low reputation scores, certain social media sites, etc.), electronic devices communicating sensitive data in an insecure manner or with an unauthorized entity, electronic devices accessing a program on an unknown network, electronic devices updating a program or failing to update a program to a specific version, and so forth.

### Brief Description of the Drawings

Some implementations of the present disclosure are described with respect to the following figures.
FIG. 1 is a block diagram of an example arrangement that includes a security system coupled to various electronic devices, according to some examples.
FIGS. 2-3 are graphs illustrating examples of intelligent responses by a security system to respective alerts according to some implementations of the present disclosure.
FIG. 4 is a block diagram of a security system coupled to electronic devices according to some examples.
FIG. 5 is a flow diagram of a process according to some examples.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### Detailed Description

Security systems can generate alerts in response to detected events that are indicative of potential security issues. In some cases, a security system can include endpoint security mechanisms that are part of electronic devices. The endpoint security mechanisms are run locally in respective electronic devices to detect events that are indicative of potential security issues. Examples of endpoint security mechanisms can include malware scanners that are able to detect presence of malware (e.g., viruses, worms, ransomware, etc.), user and entity behavior analytics (UEBA) mechanisms to detect anomalies in behaviors of users or other entities, lateral movement detectors, and so forth.

An alert may be generated by a security system due to operations in an electronic device, where the operations can include activities associated with one or more entities in the electronic device. Entities can include any or some combination of processes, objects, resources, users, and so forth.

A "process" can refer to program (including machine-readable instructions) under execution in the electronic device. A process in the electronic device can cause execution of another process in the electronic device (or in another electronic device).

Additionally, a process can create or modify an object in the electronic device. An "object" can refer to an artifact, configuration information, a network connection, a scheduled task such as in a queue, or a call of an application programming interface (API) or a library, a user account, as examples.

An artifact can refer to a file, a database, or any other type of data that is created or modified (updated or deleted) as part of the operation of a process. Configuration information relates to a configuration of the electronic device or a component in the electronic device. In an example, a registry, such as associated with an operating system (OS) of the electronic device), can include configuration information related to settings, options, or other values for hardware and software components in the electronic device. A process can create a registry or modify a registry. A registry can include multiple registry entries relating to different settings, options, or other values for hardware and software.

A process can also establish, modify, or tear down a network connection. Additionally, a process can add a scheduled task to a queue, or make a call to an API or a library.

A resource can refer to a website, a domain name system (DNS) server, or any other type of resource accessible by an electronic device. A file may be downloaded from a website. A process may interact with a website. An electronic device may interact with a DNS server to obtain an Internet Protocol (IP) address associated with a domain name. There are many other examples of resources that an electronic device can interact with.

By the time an alert based on activities of a group of entities is generated in the electronic device, other entities may have already been started, created, modified, or interacted with. Such other entities may pose security issues that can arise at a later time. Although the alert may indicate that remediation actions should be taken with respect to the group of entities associated with the alert (e.g., a first process starting a second process), a security system may not be able to address security issues posed by other entities that are outside the scope of the alert.

A group of entities is "associated with the alert" if activities involving the group of entities led a security system (e.g., an endpoint security engine 104-1 to 104-N and/or the central security service 102) to issue the alert. Generally, an entity is "outside the scope" of an alert if the alert does not provide any indication of a security issue associated with the entity. For example, an alert may be raised when a first process starts a second process. After the alert is raised, the second process may start a third process, and the third process can create or modify an artifact. The artifact that is created or modified by the third process may be outside the scope of the alert because the artifact was not directly related to either the first process or the second process (e.g., the artifact was not created or modified by the first process or the second process). As a result, the alert may not indicate that the artifact poses a security issue. In another example, a fourth process may be outside the scope of the alert if the fourth process is part of a chain of entities that is separate from a chain of entities that includes the first process and the second process.

As yet a further example, a registry entry or another object may be outside the scope of the alert if the registry entry or other object was created or modified by a process that is different from the first process and the second process associated with the alert. If an entity outside the scope of the alert is not investigated for a potential security issue, then a remediation action is not applied to the entity, and the entity may later cause a malfunction in the electronic device or cause loss or theft of data.

In accordance with some implementations of the present disclosure, an intelligent response security mechanism is able to determine remediation actions to take in response to an alert generated due to operations of an electronic device. The intelligent response security mechanism is able to identify any entities outside the scope of the alert, and to determine what if any remediation actions should be taken with respect to such entities.

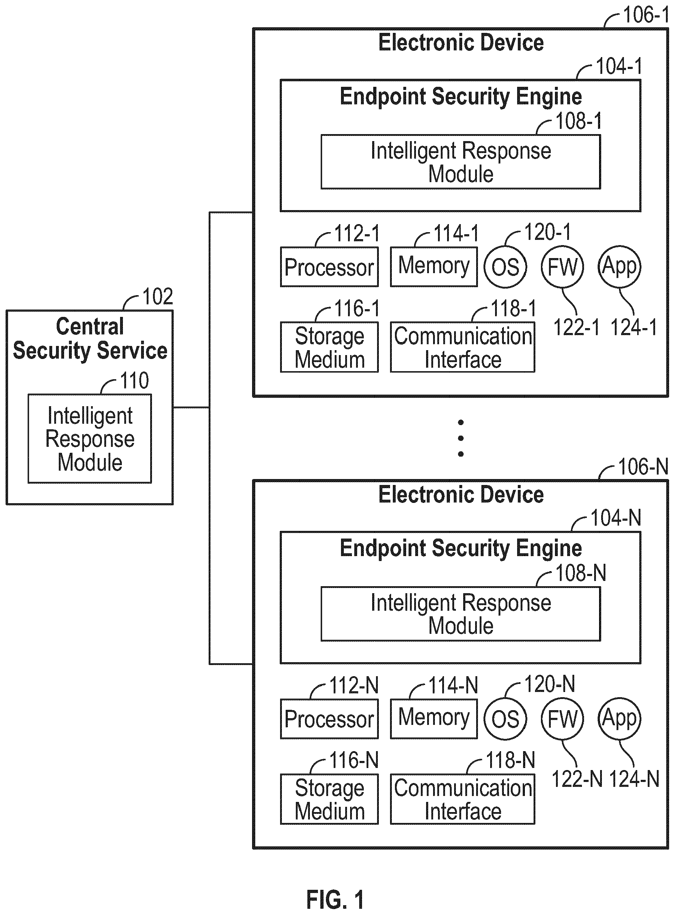

FIG. 1 is a block diagram of an example arrangement that includes a security system to protect various electronic devices. The security system includes a central security service 102 and endpoint security engines 104-1 to 104-N (N ≥ 1) included in respective electronic devices 106-1 to 106-N.

Examples of electronic devices include any or some combination of the following: desktop computers, notebook computers, tablet computers, server computers, smartphones, Internet-of-Things (IoT) devices, household appliances, game appliances, vehicles or vehicle controllers, storage systems, communication nodes, and so forth. The electronic devices 106-1 to 106-N may be located in a network of an enterprise, for example. An "enterprise" can refer to a business concern, an education organization, a government agency, an individual, any group of users, or any other organization. The enterprise network can include a local area network (LAN), a wide area network (WAN), and so forth. Some electronic devices may be coupled to the enterprise network over a public network, such as the Internet.

The endpoint security engines 104-1 to 104-N run locally in the electronic devices 106-1 to 106-N to detect events that are indicative of potential security issues. Examples of endpoint security engines can include malware scanners that are able to detect presence of malware (e.g., viruses, worms, ransomware, etc.), user and entity behavior analytics (UEBA) mechanisms to detect anomalies in behaviors of users or other entities, lateral movement detectors to detect lateral movement of attacking entities that move across electronic devices in a network, and so forth.

Each endpoint security engine 104-i (i = 1 to N) can be implemented using one or more agents, where an "agent" can refer to a software module executed in the electronic device 106-i to perform security functions. The agent(s) of an endpoint security engine is (are) executable on a hardware processing circuit, which can include any or some combination of a microprocessor, a core of a multi-core microprocessor, a microcontroller, a programmable integrated circuit, a programmable gate array, or another hardware processing circuit.

In the example of FIG. 1, the endpoint security engines 104-1 to 104-N can interact with the central security service 102 to enable the central security service 102 to provide protection for multiple electronic devices. A "central" security service can refer to any service that is able to interact with one or more electronic devices to provide security services to protect the one or more electronic devices against an attack. The central security service can be provided in a cloud, at a server, or any other centralized location that allows the central security service to interact with multiple electronic devices.

In accordance with some implementations of the present disclosure, each endpoint security engine 104-i includes a respective intelligent response module 108-i. Each intelligent response module 108-i can include machine-readable instructions that are part of the respective endpoint security engine 104-i.

The central security service 102 also includes an intelligent response module 110. An intelligent response module (any or some combination of 108-1 to 108-N and 110) is able to detect that an alert has been generated in one or more electronic devices, identify any entities outside the scope of the alert, and determine what if any remediation actions should be taken with respect to such entities outside the scope of the alert. An alert can be generated by the security system (the central security service 102 and/or an endpoint security engine 104-1 to 104-N) based on alert generation rules. In some examples, the security system can apply machine learning to generate alerts.

Each electronic device 106-i further includes a respective hardware processor 112-i, a memory 114-i, a storage medium 116-i, and a communication interface 118-i. The communication interface 118-i allows the electronic device 106-i to communicate over a network, such as with the central security service 102 or with another electronic device.

Programs are executed in the electronic device 106-i on the processor 112-i. Although just one hardware processor is depicted in FIG. 1, the electronic device 106-i can include multiple hardware processors. Programs that are executable on the hardware processor 112-i include an operating system (OS) 120-i, firmware 122-i (e.g., Basic Input/Output System (BIOS) code), and an application program 124-i. Processes in the electronic device 106-i include processes associated with the OS 120-i, firmware 122-i, application program 124-i, or any other program that execute in the electronic device 106-i.

A hardware processor can include a microprocessor, a core of a multi-core microprocessor, a microcontroller, a programmable integrated circuit, a programmable gate array, or another hardware processing circuit. A memory can be implemented using one or more memory devices, such as dynamic random access memory (DRAM) devices, static random access memory (SRAM) devices, flash memory device, and so forth.

A storage medium can include persistent storage such as one or more disk-based storage devices, solid-state drives, and so forth. A communication interface can include a transceiver to transmit and receive signals, as well as any protocol layers (implemented with machine-readable instructions and/or hardware) to implement communication protocols associated with communications over a network.

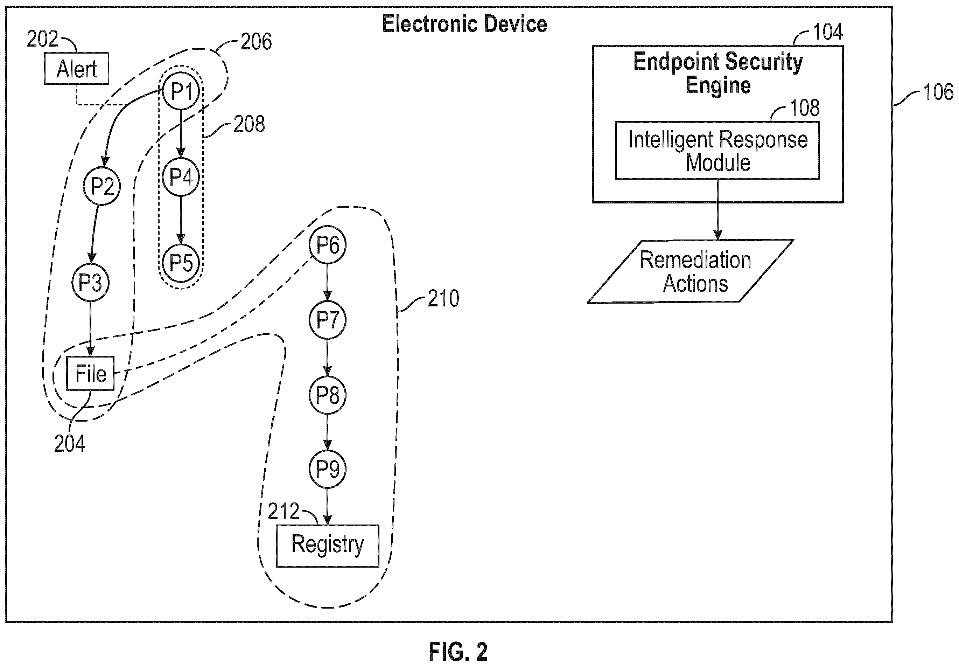

FIG. 2 is an example graph that illustrates various entities involved in operations of an electronic device 106, which can be any of the electronic devices 106-1 to 106-N of FIG. 1. In the example of FIG. 2, a process P1 starts a process P2. For example, the process P1 can issue a command to start the process P2. The endpoint security engine 104 (any one of the endpoint security engines 104-1 to 104-N) in the electronic device 106 may issue an alert 202 based on information associated with the process P1 starting the process P2 satisfying a security alert criterion. For example, the security alert criterion may specify that a process of a given first program should not be starting a process of a given second program during a particular time interval or under conditions currently present in the electronic device 106.

As further shown in Fig. 2, the process P2 starts a process P3, which in turn creates or modifies a file 204 (an example of an artifact). The processes P1 to P3 and the file 204 are part of a chain 206 of directly related entities, where the chain includes a sequence of entities that were created or modified in the depicted order (chronological order or causal order). A chain of "directly related entities" refers to entities in which a direct relationship exists between successive entities in the sequence. A direct relationship exists between a first entity and a second entity if the first entity affected an operation of the second entity (e.g., one process starting another process) or the first entity created or modified the second entity, or if the second entity affected an operation of the first entity or the second entity created or modified the first entity.

FIG. 2 shows another chain 208 of directly related entities, including processes P1, P4, and P5 (e.g., P1 started P4, which started P5). FIG. 2 further shows another chain 210 of directly related entities, which include the file 204, processes P6, P7, P8, and P9, and a registry 212. In some examples, the file 204 may be directly related to the process P6 if the file 204 contains the image (including machine-readable instructions) for the process P6. In other words, the file 204 contains machine-readable instructions of a program that when executed results in the process P6. In the chain 210 of directly related entities, the process P6 started the process P7, which started the process P8, and which started the process P9. The process P9 updated the registry 212, such as by adding or modifying an entry of the registry 212.

By the time the alert 202 is generated, the process P3 may have already been started and the file 204 may have been created by the process P3. The file 204 in turn may have led to the launching of the process P6, which triggered respective processes P7, P8, and P9, along with the modification of the registry 212.

In the example of FIG. 2, the processes P1 and P2 are associated with the alert 202 because the process P1 starting the process P2 caused the endpoint security engine 104 to issue the alert 202. The process P3 is within the scope of the alert 202 because the process P3 was started by the process P2 that is associated with the alert 202. However, in the chain 206 of directly related entities, the file 204 is outside the scope of the alert 202 because the file 204 is not directly related to the processes P1 and P2 that are associated with the alert 202.

Even if a remediation action were to be applied with respect to processes P1, P2, and P3 (e.g., by terminating the processes P1, P2, and P3), which are the processes within the scope of the alert 202, a traditional security system may not make a determination that a remediation action should be applied to the file 204 that is outside the scope of the alert 202. Similarly, the traditional security system may not make a determination that remediation actions should be applied to processes P4, P5, P6, P7, P8, P9, and the registry 212 that are also outside the scope of the alert 202.

If remediation actions are not taken with respect to entities outside the scope of the alert 202, then security issues may be arise later, as one or more of the file 204, the processes P4, P5, P6, P7, P8, P9, and the registry 212 may cause a malfunction in the electronic device 106 or cause data loss or theft in the electronic device 106.

A human analyst may manually study the operations of the electronic device 106 in an attempt to ascertain what entities may be outside the scope of the alert 202, and what if any remediation actions should be taken. However, such a manual analysis is time-consuming, and the human analyst may miss certain entities that may be malicious. Moreover, the time delay involved in performing the manual analysis may allow for malicious entities to perform their respective activities in the electronic device 106.

In accordance with some implementations of the present disclosure, the intelligent response module 108 (which can be any of the intelligent response modules 108-1 to 108-N) in the electronic device 106 can automatically determine appropriate remediation actions to address entities that are outside the scope of the alert 202. The intelligent response module 108 is able to discover all malicious parent processes, children processes, sibling processes, other indirectly related processes, objects, and resources that may be directly or indirectly related to the alert 202. The intelligent response module 108 can dynamically determine the appropriate remediation action for each respective entity based on a type of the respective entity, a relationship of the respective entity to entities associated with the alert, a context of the alert, an expected remediation action directive by a customer (e.g., the intelligent response module may be provided with information of preferred remediation actions from a user of an electronic device), and so forth. In this way, the intelligent response module 108 is able to remove the burden from users and also is able to automatically handle remediation actions to be applied to downstream threats that cannot be known at the time of the alert. The remediation action to apply can be based on predefined rules or based on applying machine learning.

Although the present examples refer to the intelligent response module 108 making a determination of what remediation actions to apply in response to an alert, in other examples, the intelligent response module 110 in the central security service 102 can make a determination of what remediation actions to apply in response to the alert. In yet further examples, the determination of remediation actions to be applied can be based on cooperation between multiple intelligent response modules (any combination of 110 and 108-1 to 108-N).

Remediation actions to be applied can be based on the type of entity. For example, a remediation action for a process can include a terminate action, which stops execution of the process and tears down the process so that the process cannot restart again.

A remediation action for an artifact such as a file can be any or some combination of the following: delete (to remove the artifact from a storage), quarantine (to place the artifact in an isolated location to prevent access of the artifact and to prevent the artifact from triggering any activity), rollback (to place the artifact in a prior state, such as to revert a version of a file to a prior version), add to watchlist (to place the artifact on a list that is to be monitored), and so forth.

A remediation action for a resource such as a website, a domain, etc., can be any or some combination of the following: terminate a connection to the resource, block the resource, block an IP address associated with the resource, add the resource to a watch list, and so forth.

A remediation action for configuration information (e.g., a registry or registry entry) is to revert the configuration information from a current state to a prior state, or to delete the configuration information.

A remediation action for a user is to block the user from accessing an electronic device or a network, such as by invalidating credentials for the user or locking a user account.

In some examples, each type of entity can be associated with a set of potential remediation actions that can be applied. The set of potential remediation actions associated with each type of entity can be stored in a data structure (e.g., a database, a library, etc.) that is accessible to an intelligent response module.

Examples of relationships between entities can include a parent relationship, a child relationship, and a sibling relationship. A "parent" process may be a process that starts another process. In the example of FIG. 2, the process P1 is a parent of the process P2, and the process P2 is a parent of the process P3. A "child" process is a process started by another process. In the example of FIG. 2, the process P2 is a child of the process P1, and the process P3 is a child of the process P2. A parent process and a child process have a direct lineage to one another. If a remediation action were to be applied to the parent process (e.g., shut down the parent process), then the intelligent response module 108 would also determine that the same remediation action would be applied to the child process, based on the direct lineage.

More generally, a "lineage" can refer to a link between entities that are part of a chain of directly related entities, such as the chain 206. If the graph of FIG. 2 is a tree, then the chains 206, 208, and 210 are branches of the tree. Entities in a tree branch have direct lineages to one another.

A "sibling" process is a process that shares a common parent. In the example of FIG. 2, the process P2 and the process P4 are sibling processes because they share a common parent process P1. The processes P3 and P5 are also sibling processes because they share a common grandparent process P1. The process P2 and P4 have a sibling relationship with one another. Similarly, the processes P3 and P5 have a sibling relationship with one another. Based on this sibling relationship, the intelligent response module 108 would determine that a remediation action would have to be applied to the process P4 if a remediation action is identified for the process P2.

Another type of relationship includes a relationship in which a process is spawned based on an artifact (e.g., a file containing an image of the process) or a relationship in which a behavior of the process is affected by another object (e.g., a registry entry). Such relationships are examples of functional relationships between different types of entities (a process and an artifact or a process and a registry).

Another type of relationship is an interaction relationship, such as in an example where a file is downloaded from a website or obtained from another resource, or where a process interacts with a website or another resource.

Although some examples of relationships are noted above, there may be many other types of relationships between entities. Remediation actions can be applied based on relationships between entities.

The context of an alert can include any or some combination of the following: a severity of the alert, a risk of the alert, a uniqueness of an anomaly associated with the alert, an intelligence associated with the alert, and so forth. A security system (e.g., an endpoint security engine 104-1 to 104-N and/or the central security service 102) may classify the severity of the alert into multiple severity categories (e.g., high, medium, low or a value from a numerical range). The severity category for the alert can be based on the type of activity involved between entities that gave rise to the alert. For example, a modification of a registry entry for an OS may be classified into a high severity category, while sending an email may be classified into a low severity category.

The security system may classify the risk of the alert into multiple risk categories (e.g., high, medium, low or a value from a numerical range). If the alert is part of a collection of alerts that occurred in a relatively short amount of time, the security system may classify the alert as having a high risk. However, if the alert is an individual alert with no other alerts issued close in time to the alert, the security system may classify the alert as having a low risk.

The security system may classify the uniqueness of the alert based on an anomalous pattern associated with the alert. The anomalous pattern includes a pattern of the types of entities and activities involved in giving rise to the alert. The pattern can be compared to past patterns that have been encountered. If the pattern was not previously encountered or has been encountered with relatively low frequency, then the security system can classify the uniqueness of the alert as high. On the other hand, if the pattern has been frequently encountered in the past, then the security system can classify the uniqueness of the alert as low. Information of patterns that have been encountered can be stored in a database, for example, and compared to newly encountered patterns giving rise to alerts.

An intelligence associated with an alert can refer to a threat intelligence. In some examples, definitions of threat intelligence can be provided by an open source knowledge base such as MITRE ATT&CK. Alternatively, definitions of threat intelligence can be provided by a proprietary knowledge base available via paid subscription, such as the Cylance Cyber Threat Intel Report from Blackberry. Definitions of threat intelligence can be available from other sources. Generally, threat intelligence includes a list of known bad Indicators of Compromise (IOCs), which can include any or some combination of the following: a cryptographic hash of a file, a file path, a registry key, a domain name, an IP address, and so forth. Any alert that involves an entity having a known bad IOC may be considered a higher risk alert.

In the example of FIG. 2, an intelligent response module (any or some combination of 110 and 108-1 to 108-N) can determine the following potential remediation actions to be applied to the various entities shown in FIG. 2: terminate processes P1 to P9, quarantine the file 204, and revert the registry 212.

Based on the context of the alert 202, the intelligent response module can determine whether to be more lenient or less lenient. Being more lenient would result in the intelligent response module applying remediation actions against a smaller collection of entities or applying less severe remediation actions, while being less lenient would result in the intelligent response module applying remediation actions against a larger collection of entities or applying more severe remediation actions.

A less severe remediation action can include adding an artifact to a watch list rather than deleting or reverting the artifact. More severe remediation actions can include deleting the artifact rather than just quarantining the artifact, quarantining an electronic device to prevent any communication in and out of the electronic device, shutting down the electronic device, locking a user account.

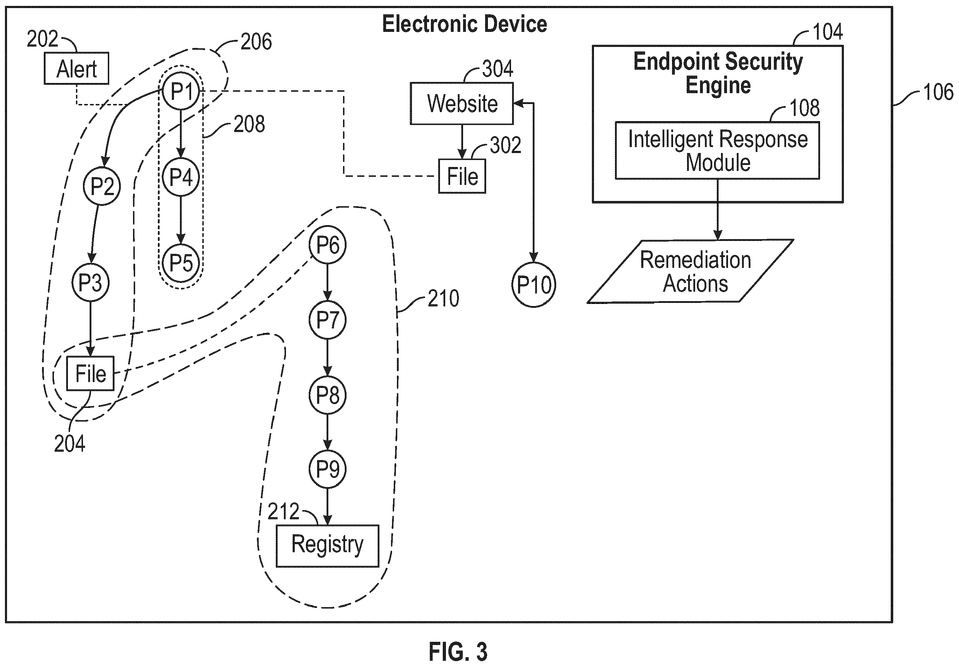

FIG. 3 is another example graph that illustrates various entities involved in operations of the electronic device 106. The graph of FIG. 3 includes the processes P1 to P9, the file 204, and the registry 212 shown in FIG. 2. In addition, the graph of FIG. 3 includes a file 302 that was downloaded from a website 304. The graph of FIG. 3 further includes a process P10 that interacts with the website 304 over a network connection. The file 302 may contain an image for the process P1. The intelligent response module 308 (by itself or in coordination with another intelligent response module such as 110) may identify the additional entities (302, 304, P10) in response to the alert 202. The intelligent response module 308 may also determine remediation actions to take with respect to the additional entities, including, for example, quarantining the file 302, blocking the website 304, and terminating the network connection between the process P10 and the website 304.

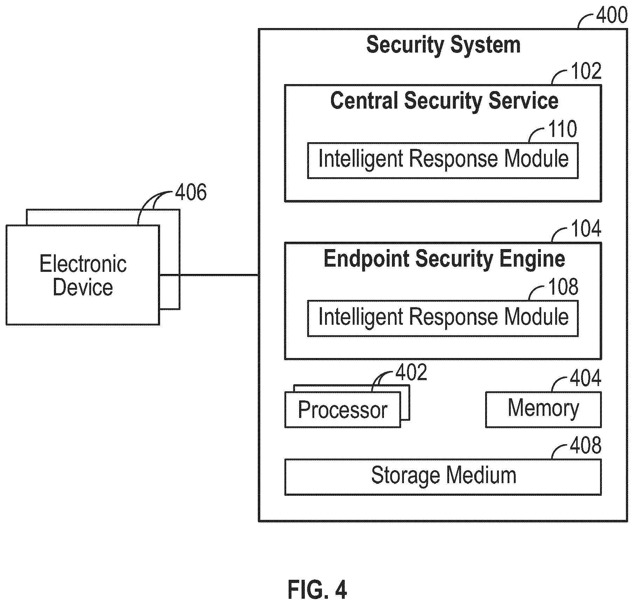

FIG. 4 is a block diagram of an example arrangement that includes a security system 400 for protecting electronic devices 406 (e.g., electronic devices 106-1 to 106-N in FIG. 1). The security system 400 includes the central security service 102 (which includes the intelligent response module 110) and the endpoint security engine 104 (which includes the intelligent response module 108). Although just one endpoint security engine 104 is depicted in FIG. 4, there would be multiple endpoint security engines in respective multiple electronic devices 406.

The security system 400 includes one or more hardware processors 402 and a memory 404. The central security service 102 and the endpoint security engine 104 are executable on the one or more hardware processors 402. Note that the endpoint security engine 104 is executable on one or more processors in an electronic device 406, and the central security service 102 is executable on one or more processors in a computer (or collection of computers) separate from the electronic devices 406. Machine-readable instructions of the central security service 102 and the endpoint security engine 104 can be stored in a non-transitory machine-readable or computer-readable storage medium 408, and the machine-readable instructions can be retrieved from the storage medium 408 for execution on the one or more hardware processors 402.

In some examples, the machine-readable instructions of the security system 400 are executable to detect an alert generated in response to an operation on an electronic device 406, where the operation involves a group of entities (e.g., a first process and a first entity). The first entity may be another process, an object, a resource, or a user.

In response to the alert, the machine-readable instructions discover a second entity that is outside a scope of the alert, and the machine-readable instructions apply remediation actions with respect to at least the first process, the first entity, and the second entity to address the alert.

More generally, the machine-readable instructions are able to discover an attack chain in response to the alert, where the attack chain includes the group of entities associated with the alert as well as other entities outside the scope of the alert. The machine-readable instructions determine remediation actions to apply to entities of the attack chain based on a plurality of factors, including any or some combination of: a type of each respective entity in the attack chain, a relationship of the respective entity to entities associated with the alert, a context of the alert, an expected remediation action directive by a customer, and so forth.

In an example, the second entity is outside the scope of the alert based on: (1) the first entity being a second process, (2) the alert being raised responsive to the first process starting the second process, and (3) the second entity having an entity type (e.g., an object, a resource, a user, etc.) different from a process. In another example, the second entity is outside the scope of the alert based on the second entity being separate from a chain of directly related entities including the first process and the first entity. For example, the chain of directly related entities is a first tree branch of directly related entities (e.g., 206 in FIG. 2), and the second entity is in a second tree branch of directly related entities (e.g., 208 or 210 in FIG. 2).

There can be many other examples of entities being outside the scope of the alert, including those discussed further above.

In some examples, discovering of the second entity is based on detecting that the second entity is related to an artifact (e.g., the file 204 in FIG. 2) generated by a process (e.g., P3) that is part of a chain of directly related entities (e.g., 206) including the first process (e.g., P1) and the first entity (e.g., P2).

In further examples, the second entity is a resource (e.g., the website 304 in FIG. 3), and discovering the resource is based on detecting that a file (e.g., 302 in FIG. 3) including an image containing machine-readable instructions for the first process is obtained from the resource.

In additional examples, the second entity is a second process, and discovering the second process is based on detecting that the first process and the second process have a common parent. The common parent can be an OS component that started the first and second processes, a file shared by the first and second processes, a web server that launched the first and second processes, a registry entry that both the first and second processes have interacted with, and so forth.

In some examples, the alert is in a first device (an electronic device), and the discovering of the second entity is by a central service (e.g., 102 in FIG. 1). For example, the central service discovers the second entity based on information collected from a plurality of devices connected to the central service. As a further example, the second entity is in a second device different from the first device.

In some examples, the machine-readable instructions of the security system 400 can confirm that remediation actions have been taken with respect to all entities of an attack chain, such as all the entities shown in FIG. 2 or 3.

In some examples, the machine-readable instructions of the security system 400 can determine that a primary remediation action is not possible with respect to the second entity. In response to the determining, the machine-readable instructions of the security system 400 can identify a secondary remediation action to apply against the second entity. For example, the second entity may be a user, and the primary remediation action may be logging the user out of all user accounts and forcing use of a second factor authentication after the user has been logged out. A user account management system responsible for applying the primary remediation action may not be responsive (e.g., the user account management system is busy or down or compromised by an attacker). The machine-readable instructions of the security system 400 can identify another management system that may be able to disconnect the user's access of an electronic device. The secondary remediation action in this example is use of the other management system to disconnect the user's access of the electronic device.

In other examples, other secondary remediation actions can be applied in response to determining that primary remediation actions are not available.

In some examples, the machine-readable instructions of the security system 400 can, in response to the alert, determine a correct order of remediation actions to apply against entities of an attack chain. For example, in FIG. 3, it may be optimal to first block the website 304 and any interaction with the website 304 to prevent downloading of any further compromised files. Next, the security system 400 can quarantine or delete the files 204 and 302 to prevent additional processes from being spawned from the compromised files 204 and 302. Subsequently, the security system 400 can terminate processes.

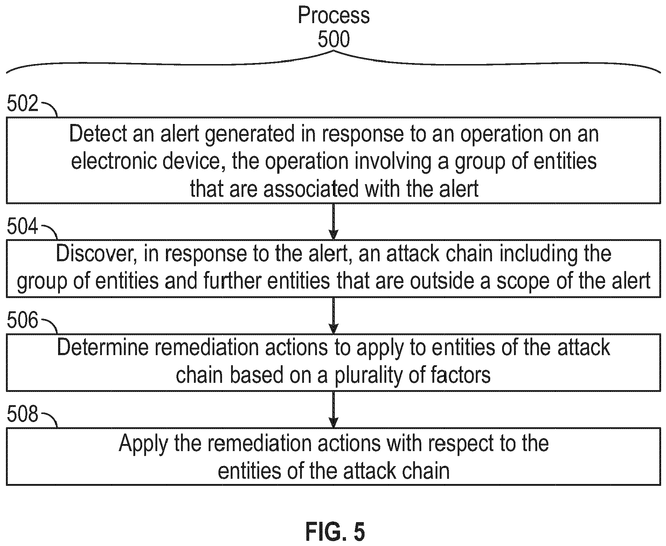

FIG. 5 is a flow diagram of a process 500 according to some examples, which can be performed by a security system. The process 500 includes detecting (at 502) an alert generated in response to an operation on an electronic device, where the operation involves a group of entities that are associated with the alert. The entities can include any or some combination of processes, objects, resources, users, and so forth.

The process 500 includes discovering (at 504), in response to the alert, an attack chain including the group of entities and further entities that are outside a scope of the alert. The process 500 includes determining (at 506) remediation actions to apply to entities of the attack chain based on a plurality of factors. The factors can include any or some combination of: a type of each respective entity in the attack chain, a relationship of the respective entity to entities associated with the alert, a context of the alert, an expected remediation action directive by a customer, and so forth.

The process 500 includes applying (at 508) the remediation actions with respect to the entities of the attack chain. Examples of remediation actions that can be applied include any or some combination of the following: terminate a process, delete, quarantine, or rollback a file, add an entity to a watchlist, terminate a connection to a resource, block a resource, block an IP address associated with a resource, revert configuration information from a current state to a prior state, delete the configuration information, block a user from accessing an electronic device or a network, and so forth.

A storage medium (e.g. 116-1 to 116-N in FIG. 1 or 408 in FIG. 4) can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory or other type of non-volatile memory device; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the present disclosure, use of the term "a," "an," or "the" is intended to include the plural forms as well, unless the context clearly indicates otherwise. Also, the term "includes," "including," "comprises," "comprising," "have," or "having" when used in this disclosure specifies the presence of the stated elements, but do not preclude the presence or addition of other elements.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

## Claims

1. A non-transitory machine-readable storage medium comprising instructions that upon execution cause a system to:
detect an alert generated in response to an operation on a device, the operation involving a first process and a first entity;
in response to the alert, discover a second entity that is outside a scope of the alert; and
apply remediation actions with respect to the first process, the first entity, and the second entity to address the alert.

2. The non-transitory machine-readable storage medium of claim 1, wherein the second entity is outside the scope of the alert based on:
the first entity being a second process,
the alert being raised responsive to the first process starting the second process, and
the second entity having an entity type different from a process.

3. The non-transitory machine-readable storage medium of claim 2, wherein the entity type of the second entity is an artifact type, a registry type, or a resource type, and the second entity is an artifact, a registry, or a resource.

4. The non-transitory machine-readable storage medium of claim 1, wherein:
the second entity is outside the scope of the alert based on the second entity being separate from a chain of directly related entities including the first process and the first entity; or
the second entity is outside the scope of the alert based on the second entity being separate from a chain of directly related entities including the first process and the first entity, wherein the chain of directly related entities is a first tree branch of directly related entities, and the second entity is in a second tree branch of directly related entities.

5. The non-transitory machine-readable storage medium of claim 1, wherein:
the discovering of the second entity is based on detecting that the second entity is related to an artifact generated by a process that is part of a chain of directly related entities including the first process and the first entity; or
the discovering of the second entity is based on detecting that the second entity is related to an artifact generated by a process that is part of a chain of directly related entities including the first process and the first entity, wherein the second entity is a second process, and the discovering of the second process is based on detecting that a file generated by a process that is part of chain of directly related entities including the first process and the first entity includes an image containing machine-readable instructions for the second process.

6. The non-transitory machine-readable storage medium of claim 1, wherein the second entity is:
a resource, and wherein the discovering of the resource is based on detecting that a file including an image containing machine-readable instructions for the first process is obtained from the resource; or
a second process, and wherein the discovering of the second process is based on detecting that the first process and the second process have a common parent.

7. The non-transitory machine-readable storage medium of claim 1, wherein the alert is in a first device, and the discovering of the second entity is by a central service.

8. The non-transitory machine-readable storage medium of claim 7, wherein the central service discovers the second entity based on information collected from a plurality of devices connected to the central service.

9. The non-transitory machine-readable storage medium of claim 8, wherein the second entity is in a second device different from the first device.

10. The non-transitory machine-readable storage medium of claim 9, wherein an anomaly to be addressed by a remediation action is due to lateral movement between the first device and the second device.

11. The non-transitory machine-readable storage medium of claim 1, wherein the instructions upon execution cause the system to:
determine a remediation action to apply based on one or more of a type of the second entity, a relationship of the second entity to entities associated with the alert, a context of the alert, and an expected remediation action directive by a user.

12. The non-transitory machine-readable storage medium of claim 11, wherein the context of the alert comprises any or some combination of the following: a severity of the alert, a risk of the alert, a uniqueness of an anomaly associated with the alert, and an intelligence associated with the alert.

13. The non-transitory machine-readable storage medium of claim 1, wherein the instructions upon execution cause the system to:
confirm that remediation actions have been taken with respect to entities of an attack chain including the first process, the first entity, and the second entity;
determine that a primary remediation action is not possible with respect to the second entity, and in response to the determining, identify a secondary remediation action to apply against the second entity; or.
in response to the alert, determine a correct order of remediation actions to apply against entities of an attack chain including the first process, the first entity, and the second entity.

14. A security system comprising:
one or more processors; and
a non-transitory storage medium storing instructions executable on the one or more processors to:
detect an alert generated in response to an operation on a device, the operation involving a group of entities that are associated with the alert;
in response to the alert, discover an attack chain including the group of entities and further entities that are outside a scope of the alert;
determine remediation actions to apply to entities of the attack chain based on a plurality of factors; and
apply the remediation actions with respect to the entities of the attack chain.

15. A method of a security system comprising a hardware processor, the method comprising:
detecting an alert generated in response to an operation on a device, the operation involving a group of entities that are associated with the alert;
in response to the alert, discovering an attack chain including the group of entities and further entities that are outside a scope of the alert;
determining remediation actions to apply to entities of the attack chain based on a plurality of factors; and
applying the remediation actions with respect to the entities of the attack chain.
